# EUROPÄISCHE PATENTSCHRIFT

(11) **EP 3 800 389 B1**
(45) Veröffentlichungstag und Bekanntmachung des Hinweises auf die Patenterteilung: **24.06.2026**
(21) Anmeldenummer: 20187647.1
(22) Anmeldetag: 24.07.2020
(51) Int. Cl.: F16L 23/20, F28F 9/18

(54) **FLANSCHVERBINDUNG MIT SCHWEISSRINGDICHTUNG**
FLANGE CONNECTION WITH WELDED RING SEAL
RACCORDEMENT À BRIDE POURVU DE JOINT À BAGUE DE SOUDURE

(30) Priorität: 20.08.2019 DE 102019122355
(43) Veröffentlichungstag der Anmeldung: 07.04.2021
(73) Patentinhaber: KLINGER Kempchen GmbH, 46147 Oberhausen (DE)
(72) Erfinder: Bial, Thorsten, 45899 Gelsenkirchen (DE); Seifert, Clemens, 33739 Bielefeld (DE)
(74) Vertreter: Andrejewski - Honke Patent- und Rechtsanwälte Partnerschaft mbB

(56) Entgegenhaltungen:
- EP-A2- 2 131 088
- DE-A1- 3 406 314
- DE-A1- 3 540 344
- DE-B- 1 248 393
- FR-A- 1 352 092
- GB-A- 846 576

## Beschreibung

Die vorliegende Erfindung betrifft eine Flanschverbindung mit zwei Flanschen und einer zwischen den Flanschen angeordneten Schweißringdichtung, wobei die Schweißringdichtung zwei übereinander angeordnete Schweißringhälften aufweist, die jeweils einen Basisabschnitt und eine daran angeordnete Lippe aufweisen, wobei die Schweißringhälften an den Basisabschnitt über eine Kehlnaht mit dem anliegenden Flansch verschweißt sind und wobei die Lippen einen torusförmigen Verbindungsabschnitt mit einem hohlen Innenraum bilden und die Schweißringhälften an dem torusförmigen Verbindungsabschnitt über eine Dichtungsnaht miteinander verschweißt sind.

Bei Schweißringdichtungen handelt es sich um Dichtungselemente, die vorzugsweise dann eingesetzt werden, wenn besonders hohe Anforderungen an die erforderliche Dichtheit gestellt werden. Dies ist beispielsweise in verfahrenstechnischen Anlagen der Fall, in denen gefährliche oder hoch-kritische Medien transportiert werden, die beispielsweise unter hohem Druck stehen oder sehr hohe Temperaturen aufweisen. Hierbei ist stets sicherzustellen, dass auch nicht geringste Bypassströme aus der Flanschverbindung austreten können.

Um ein solch hohes Maß an Dichtheit zu gewährleisten, werden die einzelnen Schweißringhälften üblicherweise zunächst mit einer Dichtfläche eines Flansches verschweißt. Dies erfolgt in der Regel über eine sogenannte Kehlnaht, die im Querschnitt eine im Wesentlichen dreieckige Form aufweist und über die zwei im Wesentlichen senkrecht zueinander stehenden Flächen miteinander verbunden werden. Demnach liegt diese Kehlnaht sowohl an der ebenen Dichtfläche eines Flansches als auch an einer radialen Außenfläche des Basisabschnittes an.

Sowohl die Positionierung der Schweißringhälften als auch deren Befestigung haben in einer äußerst exakten Art und Weise zu erfolgen, sodass die Schweißringhälften im Zuge des Verspannens der Flanschverbindung ohne bzw. mit nur einem sehr geringen Kantenversatz zueinander angeordnet sind. In diesem Zusammenhang ist es von entscheidender Bedeutung, dass die Lippen bzw. die Lippenkanten exakt zueinander positioniert werden, da diese in einem nächsten Montageschritt miteinander verschweißt werden und einen torusförmigen Verbindungsabschnitt bilden, wobei die Qualität der Schweißnaht wichtig ist für die Dichtheit und damit für die Funktionalität der Schweißringdichtung. Die die beiden Schweißhälften an den Lippen verbindende Schweißnaht wird üblicherweise als Dichtungsnaht bezeichnet.

Gemäß der üblichen Ausgestaltung sind somit der Basisabschnitt und damit auch die Kehlnähte radial innenliegend und der torusförmige Verbindungsabschnitt radial außenliegend angeordnet.

Der torusförmige Verbindungsabschnitt hat aber nicht nur die Aufgabe, die beiden Schweißringhälften miteinander zu verbinden. Vielmehr dient er der Aufnahme radialer Lasten. Gerade in verfahrenstechnischen Anlagen, die eine hohe dynamische Beanspruchung des Flansches hervorrufen, muss die Schweißringdichtung radiale Verschiebungen zu einem gewissen Maße ausgleichen können. Durch die torusförmige Ausgestaltung des Verbindungsabschnittes mit innenliegendem Hohlraum kann sich dieser zu einem gewissen Maße verformen und hierdurch die radialen Belastungen ausgleichen. Hierbei kann der torusförmige Verbindungsabschnitt im Querschnitt entweder eine kreisförmige oder eine ovale Gestalt aufweisen. Allerdings sind im Rahmen der Erfindung auch Ausgestaltungen mit umfasst, die von einer kreisförmigen oder ovalen Ausgestaltung abweichen.

Eine gattungsgemäße Ausgestaltung ist beispielsweise aus der DE 3 540 344 A1 bekannt. Wie bereits zuvor erläutert, sind die einzelnen Schweißringhälften über eine Kehlnaht mit den angrenzenden Flanschen radial innen liegend verschweißt. Die Verbindung der einzelnen Schweißhälften miteinander erfolgt über eine weitere umlaufende Dichtungsnaht, die die Schweißlippen miteinander verbindet.

Bei den bereits bekannten Schweißringdichtungen ist es allerdings problematisch, dass die Dichtheit maßgeblich von der Dichtungsnaht an dem torusförmigen Verbindungsabschnitt abhängig ist. Bereits geringfügige Fehlpositionierungen zwischen den einzelnen Schweißringhälften oder aber auch Fehler in der Dichtungsnaht selbst können dazu führen, dass die Schweißnaht insbesondere unter Einfluss von dynamischen Belastungen versagt und sich folglich einen Riss innerhalb der Dichtungsnaht ausbreitet. Mit Ausbildung eines solchen Risses kann die Schweißringdichtung jedoch keine abdichtende Funktion mehr erfüllen, sodass die innerhalb der Rohrleitung transportierten Medien in die Umgebung austreten können. Dies hat neben sicherheitskritischen Aspekten auch zur Folge, dass die verfahrenstechnische Anlage vorübergehend still gelegt werden und die Schweißringdichtung ausgetauscht werden muss.

Vor diesem Hintergrund muss die Dichtungsnaht mit äußerster Sorgfalt geschweißt werden, wobei insbesondere darauf zu achten ist, dass sich im Inneren des hohlen Innenraums des torusförmigen Verbindungsabschnittes eine sogenannte Wurzel ausbildet, die die Lippen auch von innen heraus sicher miteinander verbindet. Allerdings kann die Qualität der Schweißnaht nachträglich nicht überprüft werden, da die Flansche bereits fest miteinander verspannt sind und dementsprechend kein ausreichender Bauraum für derartige Untersuchungen zur Verfügung steht.

Zugleich kann das zu transportierende Medium im Betrieb zwischen den Basisabschnitten hindurch in den hohlen Innenraum gelangen. Bei diesen Medien kann es sich um ätzende, brennbare und/oder giftige Medien handeln, die zudem sowohl unter einem hohen Druck stehen als auch eine hohe Temperatur aufweisen können. Dies ist jedoch dahingehend von besonderer Problematik, da bei einem Entfernen der Schweißringdichtung bzw. bei einem Auftrennen der Dichtungsnaht von einer erheblichen Gefährdungslage auszugehen ist, insbesondere, da eine vorherige Reinigung des torusförmigen Verbindungsabschnittes nicht möglich ist.

Üblicherweise erfolgt daher zunächst keine voll umfängliche Auftrennung der Dichtungsnaht, sondern zunächst das Einbringen einer Entlastungsbohrung. Selbst eine solche Entlastungsbohrung ist jedoch mit einem erheblichen Risiko verbunden, da sich beispielsweise brennbare Medien unmittelbar entzünden können, was unter anderem stets mit der Gefahr eines Personenschadens verbunden ist. Dies gilt gleichermaßen auch dann, wenn ätzende oder giftige Chemikalien aus dem Hohlraum des torusförmigen Verbindungsabschnittes austreten.

Insgesamt sind daher die bereits bekannten Schweißringdichtungen gerade im Hinblick auf die Nutzerfreundlichkeit und die Montagefreundlichkeit verbesserungswürdig.

Vor diesem Hintergrund liegt der vorliegenden Erfindung die Aufgabe zugrunde, die Montage einer Schweißringdichtung zu vereinfachen und die Fehleranfälligkeit bei der Montage zu reduzieren.

Diese Aufgabe wird gelöst durch eine Flanschverbindung gemäß Anspruch 1.

Dementsprechend ist der torusförmige Verbindungsabschnitt der Schweißringdichtung radial innenliegend angeordnet. Dies bedeutet zugleich auch, dass die Basisabschnitte der Schweißringhälften radial außen liegend angeordnet sind.

Grundsätzlich sind Schweißringdichtungen mit einem radial innen liegenden torusförmigen Verbindungsabschnitt bekannt. So beschreibt beispielsweise die DE 1 248 393 A1 eine Schweißringdichtung mit zwei nebeneinander vorgesehenen Verbindungsabschnitten. Eine solche Ausgestaltung hat aber den Nachteil, dass bei Schweißringdichtungen der eingangs beschriebenen Art, die Kehlnähte aufgrund der Flanschblattrotation stark belastet werden. Gemäß der DE 1 248 393 A1 ist daher eine modifizierte Flanschblattgeometrie vorgesehen, durch die Kehlnähte vermieden werden können. Allerdings ist für eine Vielzahl von Flanschen eine derartige Modifizierung nicht zweckmäßig. Trotz der Belastungen soll daher die Befestigung der Schweißringhälften an den Flanschen in Form von Kehlnähten erfolgen, da die Vorteile einer solchen Ausgestaltung überwiegen.

So können in vorteilhafter Weise die einzelnen Schweißringhälften erst miteinander und erst im Anschluss daran mit den Flanschen verschweißt werden. Dies hat den Vorteil, dass die für die Dichtungswirkung entscheidende Dichtungsnaht zwischen den Lippen außerhalb der Flanschanordnung geschweißt werden kann. So ist es beispielsweise möglich, diese werkstattseitig oder auch herstellerseitig maschinell zu bilden, wodurch mit einem höheren Maße an Sicherheit die erforderliche Qualität gewährleistet werden kann. Dies gilt aber auch dann, wenn die Dichtungsnaht nicht maschinell sondern manuell eingebracht wird, da im Anschluss an die Bildung der Dichtungsnaht eine Überprüfung der Qualität möglich ist.

Zugleich können die einzelnen Schweißringhälften auch vor Einbringen der Dichtungsnaht exakt zueinander positioniert werden, sodass die Risiken eines Kantenversatzes gering sind.

Dementsprechend erfolgt eine Verbindung der Schweißringhälften mit den Flanschen erst in einem nachgeschalteten Verfahrensschritt, wobei dann zwischen den radial außen liegenden Flächen des Basisabschnittes und den anliegenden Dichtflächen der Flansche jeweils die Kehlnaht eingebracht wird, die entlang des gesamten Umfanges angeordnet ist. Hierbei wird zwar der Nachteil in Kauf genommen, dass die Zugänglichkeit für die Erzeugung dieser Kehlnähte deutlich reduziert ist als bei einer Schweißringdichtung, bei der in einem ersten Montageschritt die einzelnen Schweißringhälften mit dem Flansch verschweißt werden. Allerdings ist es für den Monteur wesentlich einfacher, Kehlnähte mit einer ausreichenden Qualität zu erzeugen als die Dichtungsnaht, über die die Lippen miteinander zu einem torusförmigen Verbindungsabschnitt verschweißt werden. Insbesondere kann ein geringfügiger Versatz zwischen den einzelnen Basisabschnitten bei der Erzeugung der Kehlnaht vernachlässigt werden, da eine solche für die Befestigung an dem Flansch von nebengeordneter Bedeutung ist.

Ein weiterer positiver Aspekt der vorliegenden Erfindung ist darin begründet, dass der torusförmige Verbindungsabschnitt mit dem hohlen Innenraum nicht mit dem Kanal der Rohrverbindung in Wirkverbindung steht, sodass kein Medium in den Hohlraum eindringen kann. Dieses ist insbesondere bei der Demontage der Schweißringdichtung von Vorteil.

Sofern die Schweißringdichtung ausgetauscht werden muss, erfolgt im Gegensatz zu bereits bekannten Schweißringdichtungen kein Auftrennen des torusförmigen Verbindungsabschnittes. Vielmehr werden die einzelnen Kehlnähte am Basisabschnitt aufgetrennt, sodass die Schweißringdichtung entnommen werden kann. Da die Schweißringdichtung am Basisabschnitt sehr viel mehr Material aufweist als an den Lippen, kann entsprechend auch bei der Auftrennung der Schweißnähte mit einer geringeren Präzision gearbeitet werden.

Bevorzugt liegen die Schweißringhälften über eine erste Anlagefläche des Basisabschnittes aneinander an und zumindest eine der Schweißringhälften weist eine erste Anlagefläche mit einem in vertikaler Richtung verlaufenden Rücksprung auf, wobei sich zwischen den Schweißringhälften ein radial nach außen hin offener Ringspalt bildet. Mit vertikaler Richtung ist in diesem Zusammenhang eine Richtung gemeint, die senkrecht zu den Anlageflächen angeordnet ist.

Durch den Ringspalt wird nunmehr eine Verbiegung des Basisabschnittes zu einem gewissen Maße ermöglicht. Diese Verbiegung wird verursacht durch die Spannkräfte der Befestigungsmittel, über die die Flansche miteinander verspannt werden. Würde auf einen solchen Ringspalt verzichtet und dementsprechend eine Verbiegung blockiert, müssten die im Zuge der Spannung entstandenen Kräfte zu einem großen Teil von den Kehlnähten aufgenommen werden. Hierdurch würde das Risiko eines Versagens der Kehlnähte wesentlich erhöht. Durch Einbringung eines solchen Ringspaltes wird der Kraftfluss nach innen bzw. an einen innen liegenden Bereich der Basisabschnitte verlegt, sodass die über die Kehlnähte zu übertragende Kraft verringert wird.

Diese Verlagerung des Kraftflusses wird darüber hinaus dadurch gezielt beeinflusst, dass zusätzlich oder anstelle eines solchen nach außen hin offenen Ringspaltes die erste und/oder die zweite Schweißringhälfte auf einer der ersten Anlageflächen gegenüberliegenden zweiten Anlagefläche eine in Umfangsrichtung verlaufende Einkerbung aufweist. Demnach ist diese Einkerbung der Dichtfläche des Flansches zugewandt. Eine solche Einkerbung führt dazu, dass der wirksame Querschnitt des Basisabschnittes reduziert wird, sodass der Kraftfluss zwingend durch diesen definierten Bereich verlaufen muss. Die Breite, die Tiefe und die Form dieser Einkerbung richten sich nach den erforderlichen Einbaubedingungen. Die Einkerbung hat allerdings vorzugsweise eine im Querschnitt runde oder dreieckige Form, wobei die Erfindung jedoch nicht ausschließlich auf solche Formen beschränkt ist. Grundsätzlich ist es ausreichend, wenn eine solche Einkerbung nur auf einer Schweißringhälfte vorgesehen ist, bevorzugt weisen jedoch beide Schweißringhälften eine entsprechende Einkerbung in der zweiten Anlagefläche auf. Die Form der Einkerbung kann bei beiden Schweißringhälften gleich aber auch unterschiedlich ausgebildet sein.

Als Material für die Schweißringhälften kommen vor allem austenitische Chrom-Nickel-Stähle oder Nickel-Basis-Werkstoffe in Betracht, da diese eine besonders gute Bruchdehnung aufweisen. Die Bruchdehnung ist ein Kennwert der Werkstoffwissenschaften, der die Verformungsfähigkeit eines Werkstoffes charakterisiert und angibt, wie weit ein Werkstoff verformt werden kann, bis dieser bricht bzw. sich ein Riss in diesem Material ausbildet. Die im Rahmen der Erfindung verwendeten Materialien weisen hierbei bevorzugt eine Bruchdehnung von größer als 30 % auf. Dieses Erfordernis kann unter anderem mit den bereits genannten austenitischen Chrom-Nickel-Stählen oder mit Nickel-Basis-Werkstoffen erzielt werden.

In einer Weiterbildung der Erfindung sind die Schweißringhälften jedoch nicht einteilig aus einem solchen Material gebildet. Vielmehr ist der Basisabschnitt zumindest einer der Schweißringhälften separat von der Lippe gebildet, wobei der Basisabschnitt und die Lippe über eine Plattierung miteinander verbunden sind. Dies hat den Vorteil, dass für die Lippe einerseits und den Basisabschnitt andererseits unterschiedliche Materialien verwendet werden können. Dies ist deshalb sinnvoll, da Schweißnähte bevorzugt zwischen zwei Bauteilen aus gleichem oder ähnlichen Material gebildet werden sollen, da nur so gewährleistet werden kann, dass sie unter Zugbeanspruchung nicht frühzeitig versagen. Während für den Verbindungsabschnitt jedoch ein hochwertiger Stahl mit einer großen Bruchdehnung verwendet wird, um die radialen Beanspruchungen aufnehmen zu können, werden die Flansche üblicherweise aus einem unlegierten oder niedrig-legierten Stahl gebildet. Demnach würde bei einer einteiligen Ausgestaltung aus Chrom-Nickel-Stahl oder Nickel-Basis-Werkstoff die Kehlnaht zwischen einem hoch-legierten und einem unlegierten bzw. niedrig-legierten Stahl gebildet werden.

Hierbei ist mit einem unlegierten Stahl im Rahmen der Erfindung ein Stahl gemeint, der Legierungsbestandteile in einer Gesamtmenge von weniger als 1 % aufweist. Ein niedrig-legierter Stahl weist entsprechend Legierungsbestandteile von mehr als 1 % aber weniger als 5 % auf. Liegt der Anteil der Legierungsbestandteile bei oder oberhalb von 5 %, wird von einem hoch-legierten Stahl gesprochen. Bei den bereits genannten Chrom-Nickel-Stählen und auch bei den Nickel-Basis-Werkstoffen handelt es sich um Stähle mit einem hohen Legierungsanteil.

Bei einer solchen Ausgestaltung ist dementsprechend der Basisabschnitt aus einem unlegierten oder niedrig-legierten ferritischen Kohlenstoffstahl und die Lippe austenitischem Chrom-Nickel-Stahl oder aus einem Nickel-Basis-Werkstoff gebildet.

Die Verbindung des Basisabschnittes und der Lippe erfolgt - wie bereits zuvor erläutert - über eine Plattierung. Die Plattierung kann als geschweißte Plattierung oder auch als aufgesprengte Plattierung gebildet werden. Sofern die Plattierung verschweißt wird, handelt es sich um eine Verschweißung zwischen zwei unterschiedlichen Materialien, wobei eine solche Verschweißung an der Plattierung unkritisch ist, da die Basisabschnitte und die angrenzende Lippe ausschließlich auf Druck und nicht auf Zug beansprucht werden, da die hoch-legierten Materialien der Dichtlippe eine größere Wärmeausdehnung aufweisen als die niedrig-legierten bzw. unlegierten Materialien der Basisabschnitte. Da die verbindenden Schweißnähte daher nicht auf Zug beansprucht werden, ist auch die Gefahr eines Versagens deutlich reduziert.

In einer Weiterbildung der Erfindung ist zum Schutz des torusförmigen Verbindungsabschnittes dieser mit einer Haube umhüllt. Die Haube kann hierbei sowohl einstückig als auch über einzelne zusammengesetzte Segmente gebildet sein. Die Aufgabe dieser Haube besteht darin, den torusförmigen Verbindungsabschnitt vor mechanischen Beschädigungen zu schützen. Dies ist insbesondere dann von besonderer Bedeutung, wenn abrasive Medien durch die Flanschverbindung hindurch transportiert werden. Ebenso soll die Haube bei Apparaten mit einer temperaturbeständigen Ausmauerung verhindern, dass Vergussbeton in den Bereich um den Torus fließt und das radiale Bewegungspotential einschränkt. Die Haube ist bevorzugt aus Blech, zum Beispiel aus einem Chrom-Nickel-Stahl, gefertigt und liegt zwischen den Basisabschnitten und den den Basisabschnitten zugeordneten Dichtflächen der Flansche an. Hierdurch wird die Haube zwischen den Basisabschnitten und den Flanschen verspannt und kann sich demnach nicht lösen.

In einer Weiterbildung der Erfindung erstreckt sich zumindest ein radialer Kanal von außen bis zu dem hohlen Innenraum des torusförmigen Verbindungsabschnittes. Ein solcher radialer Kanal kann beispielsweise durch eine einfache Bohrung durch eine Schweißringhälfte realisiert werden. Alternativ ist es auch möglich, dass eine oder beide Schweißringhälften in der ersten Anlagefläche eine oder mehrere Einkerbungen aufweisen, die sich radial entlang der gesamten ersten Anlagefläche erstrecken. Darüber hinaus können die beiden Alternativen auch miteinander kombiniert werden. So ist es beispielsweise denkbar, dass sich eine Bohrung entlang eines ersten radialen Abschnittes zumindest teilweise durch den Basisabschnitt einer der Schweißringhälften hindurch erstreckt und dann über einen vertikalen Kanalabschnitt mit einer Einkerbung in einem oder in beiden Befestigungsabschnitten der Schweißringhälften in Wirkverbindung steht, wobei über diesen dritten Kanalabschnitt der hohle Innenraum des torusförmigen Verbindungsabschnittes erreicht werden kann. Eine solche Ausgestaltung ist besonders dann sinnvoll, wenn ein nach außen hin offener Ringspalt vorgesehen ist, über den die Kehlnähte entlastet werden sollen. Der erste Kanalabschnitt bzw. die Bohrung, über die der erste Kanalabschnitt realisiert wird, ist in einem solchen Fall derart ausgestaltet, dass dieser über den offenen Ringspalt hinweg verläuft und der vertikale zweite Kanalabschnitt erst hinter dem Ringspalt in den dritten Kanalabschnitt bzw. in den die Einkerbung bildenden dritten Kanalabschnitt übergeht.

Mit Hilfe eines solchen Kanals ist es möglich, den Schweißraum mit inerten Gasen zu spülen, um hierdurch einen zuverlässigen Schutz der Wurzel der Dichtungsnaht zu ermöglichen. Zugleich ist auch ein Druckausgleich zwischen dem hohlen Innenraum und der Umgebung möglich, sodass sich während des Schweißprozesses kein Überdruck in dem torusförmigen Verbindungsabschnitt bilden kann.

In einer bevorzugten Ausgestaltung der Erfindung sind zumindest vier Kanäle vorgesehen, die entlang des Umfangs gleichmäßig verteilt sind. Bei vier radialen Kanälen sind diese folglich in einem Winkel von 90 ° zueinander angeordnet. An die Kanäle kann eine Verrohrung angeschlossen sein, die es ermöglicht, die Kanäle in einfacher Art und Weise mit einem Spülgasanschluss zu verbinden.

Gegenstand der Erfindung ist auch ein Verfahren zur Bildung einer Flanschverbindung gemäß Anspruch 9.

Alle im Zusammenhang mit der Flanschverbindung genannten Merkmale sind hierbei auch auf die Schweißringdichtung, die Schweißringhälfte sowie das Verfahren übertragbar, sofern sich diese in den einzelnen Gegenständen niederschlagen.

Die Schweißringdichtung für eine erfindungsgemäße Flanschverbindung zeichnet sich dadurch aus, dass die Schweißringhälften über eine erste Anlagefläche des Basisabschnittes aneinander anliegen und zumindest die erste Anlagefläche einer der Schweißringhälften ein in vertikaler Richtung verlaufenden Rücksprung aufweist, wobei sich zwischen den Schweißringhälften eine radial nach außen hin offener Ringspalt bildet und zumindest eine der Schweißringhälften auf einer der ersten Anlagefläche gegenüberliegenden zweiten Anlagefläche eine in Umfangsrichtung verlaufende Einkerbung aufweist.

Sowohl die Einkerbung als auch der nach außen offene Ringspalt dienen der Kontrolle und dem definierten Verlauf der Kraftlinien. Hierdurch wird vermieden, dass in einem verspannten Zustand der Schweißringdichtung die Kraftlinien vornehmlich durch die Befestigungsnähte verlaufen, über die die Schweißringdichtung mit dem zugeordneten Flansch verbunden wird. Eine solche Schweißringdichtung ist deshalb besonders dann geeignet, wenn die Schweißringdichtung in üblicher Art und Weise über eine Kehlnaht als Befestigungsnaht mit den Flanschen verbunden wird. Somit kann die Schweißringdichtung bei üblichen Flanschgeometrien eingesetzt werden und erfordert keine konstruktive Anpassung der Flanschblattgeometrie.

Um eine solche gezielte Kraftführung zu erreichen, erstreckt sich der radial nach außen hin offene Ringspalt in radialer Richtung über zumindest 20 %, bevorzugt über zumindest 30 %, des Basisabschnittes. Die Einkerbung ist bevorzugt in radialer Richtung am Ende des nach außen hin offenen Ringspaltes angeordnet.

Zur Bildung der erfindungsgemäßen Flanschverbindung werden die Lippen der Schweißringhälften zunächst über eine Dichtungsnaht miteinander verschweißt, sodass sie einen torusförmigen Verbindungsabschnitt bilden. Anschließend wird die Schweißringdichtung zwischen zwei Flanschen angeordnet und mit diesen verspannt, wobei die Schweißringhälften sodann mit jeweils einem Flansch an einer Dichtungsfläche über eine Kehlnaht verschweißt werden.

Gemäß einer Weiterbildung des Verfahrens wird die Schweißnaht an dem torusförmigen Verbindungsabschnitt, die auch als Dichtungsnaht bezeichnet wird, vor der Anordnung zwischen den Flanschen hinsichtlich ihrer Qualität untersucht. Durch eine solche Untersuchung kann überprüft werden, ob die Dichtungsnaht Fehlstellen aufweist, oder ob beispielsweise an einigen lokalen Stellen die Schweißnaht die beiden Lippen nicht vollständig miteinander verbindet, sodass dementsprechend keine absolute Abdichtung gewährleistet werden kann. Eine solche Untersuchung findet vorzugsweise in einem Laborbereich oder aber auch unmittelbar am Montageort statt.

Bevorzugt wird die Schweißnaht an dem torusförmigen Verbindungsabschnitt vor der Anordnung zwischen den Flanschen wärmebehandelt, um schädigende Spannungen abzubauen.

Zudem können bei dem Verfahren die Schweißringhälften vor dem Verschweißen miteinander und/oder vor dem Verschweißen der Schweißringhälften mit den Flanschen vorgewärmt werden. Hierdurch ist es möglich, mechanische Spannungen bereits im Vorfeld zu vermeiden, da die Temperaturunterschiede zwischen der Schweißnaht und der Schweißringdichtung minimiert sind.

Im Folgenden wird die Erfindung anhand von lediglich Ausführungsbeispielen zeigenden Figuren erläutert. Es zeigen:
- Fig. 1: eine erfindungsgemäße Flanschverbindung mit Schweißringdichtung und Haube,
- Fig. 2: eine alternative Flanschverbindung mit mehrteiligen Schweißringhälften,
- Fig. 3: eine alternative Flanschverbindung gem. der Fig. 2, wobei eine Schweißringhälfte einteilig ausgebildet ist,
- Fig. 4: eine alternative Flanschverbindung mit radialem Kanal.

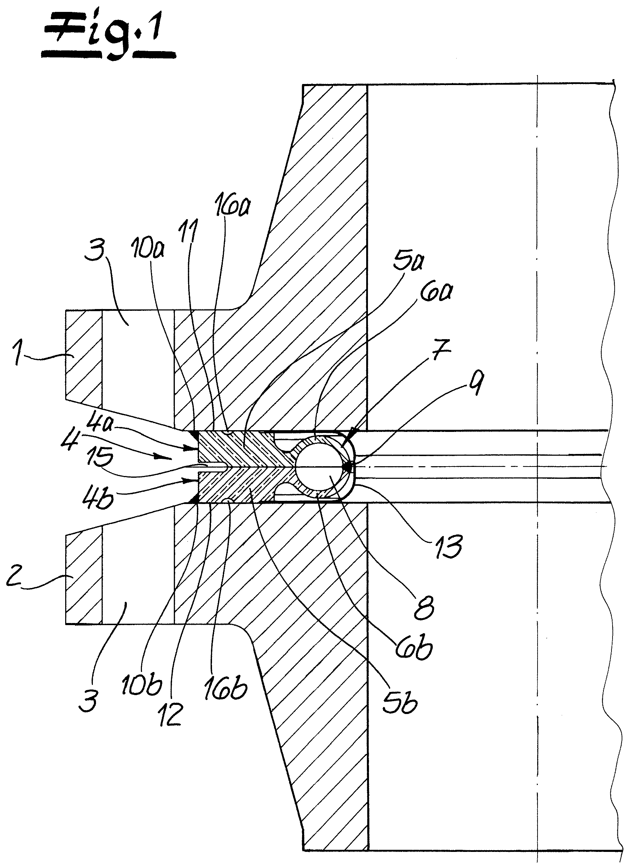

Die Fig. 1 zeigt eine Flanschverbindung mit einem ersten Flansch 1 sowie einem zweiten Flansch 2. Beide Flansche 1, 2 weisen mehrere Bohrungen 3 auf, über die die Flansche 1, 2 miteinander verspannt werden können. Die Bohrungen 3 dienen hierbei als Aufnahmemittel für übliche Befestigungsmittel, zum Beispiel Schraubverbindungen.

Zur Abdichtung der Flanschverbindung ist eine Schweißringdichtung 4 vorgesehen, die zwischen den Flanschen 1, 2 angeordnet ist und zwei übereinander angeordnete Schweißringhälften 4a, 4b aufweist. Jede dieser Schweißringhälften 4a, 4b besteht aus einem Basisabschnitt 5a, 5b sowie einer daran angeordnete Lippe 6a, 6b. Die Lippen 6a, 6b sind radial innenliegend von den Basisabschnitten 4a, 4b angeordnet und bilden einen torusförmigen Verbindungsabschnitt 7 mit einem hohlen Innenraum 8. Hierzu weisen die Lippen 6a, 6b eine im Querschnitt halbkreisförmige Gestalt auf. Zur Verbindung der beiden Lippen 6a, 6b ist eine Dichtungsnaht 9 vorgesehen, über die die beiden Lippen 6a, 6b und folglich auch die beiden Schweißringhälften 4a, 4b miteinander verschweißt sind. Die Dichtungsnaht 9 erstreckt sich durch die Lippen 6a, 6b hindurch und bildet im Innenraum 8 eine rückseitige Wurzel aus.

Die Schweißringhälften 4a, 4b sind radial außenliegend über die Basisabschnitte 5a, 5b an Dichtflächen 11, 12 der Flansche 1, 2 befestigt, wobei diese Befestigung in Form von Kehlnähten 10a, 10b realisiert ist.

Zum Schutz des torusförmigen Verbindungsabschnittes 7 ist ferner eine Haube 13 vorgesehen, die den torusförmigen Verbindungsabschnitt 7 umhüllt.

Gemäß dem Ausführungsbeispiel der Fig. 1 sind beide Schweißringhälften 4a, 4b einstückig ausgebildet und bestehen aus einem austenitischen Chrom-Nickel-Stahl oder aus einem Nickel-Basis-Werkstoff.

Dadurch, dass die Schweißringhälften 4a, 4b jeweils über eine Kehlnaht 10a, 10b mit den Flanschen 1, 2 verbunden sind, sind durch die Verspannung der Flansche 1, 2 zueinander die Kehlnähten 10a, 10b mechanisch stark belastet. Zur Entlastung dieser Kehlnähte 10a, 10b ist daher ein nach außen offener Ringspalt 15 vorgesehen, der dadurch gebildet wird, dass die Schweißringhälften 4a, 4b an einer ersten Anlagefläche, über die die Schweißringhälften 4a, 4b aneinander anliegen einen in vertikaler Richtung verlaufenden Rücksprung aufweisen. Zugleich weisen beide Schweißringhälften 4a, 4b auf einer zweiten der ersten Anlagefläche gegenüberliegenden Anlagefläche eine in Umfangsrichtung verlaufende Einkerbung 16a, 16b auf. Der nach außen offene Ringspalt 15 ermöglicht zu einem gewissen Maße eine Durchbiegung der Schweißringhälften 4a, 4b, wodurch der Kraftfluss von den Kehlnähten 10a, 10b weggeleitet wird. Die gleiche Aufgabe erfüllen auch die Einkerbungen 16a, 16b. Durch diese Maßnahmen kann die dichtende Funktion der Kehlnähte 10a, 10b über einen längeren Betriebszustand gewährleistet und insbesondere dynamische Belastungen besser ausgeglichen werden.

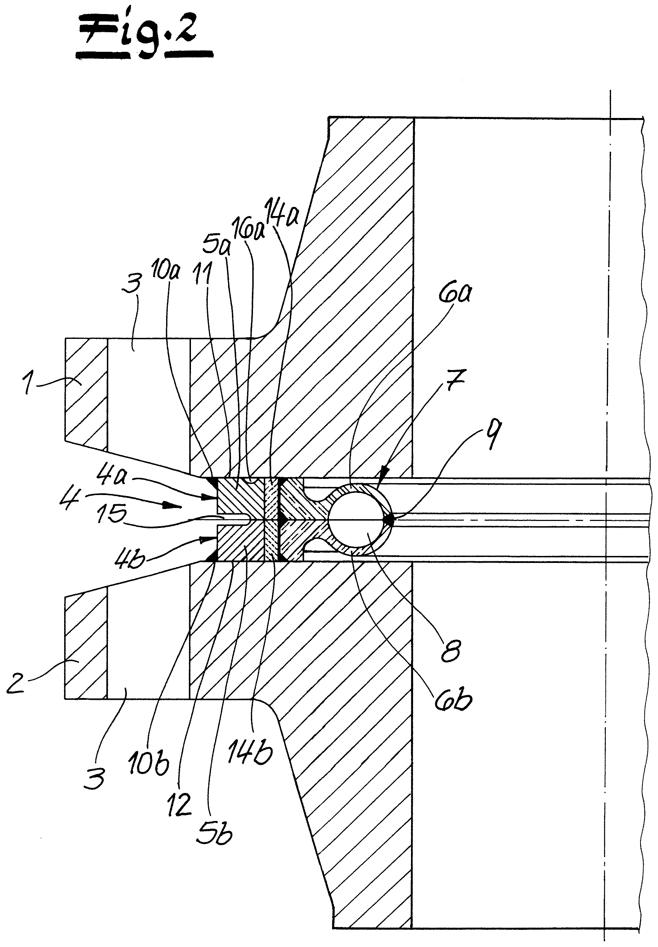

Die Ausgestaltung gemäß der Fig. 2 unterscheidet sich von der der Fig. 1 dahingehend, dass nunmehr die Schweißringhälften 4a, 4b mehrteilig ausgebildet sind. Hierzu werden die Basisabschnitte 5a, 5b separat von den Lippen 6a, 6b gefertigt und über eine Plattierung 14a, 14b miteinander verbunden. Durch eine solche mehrteilige Ausgestaltung ist es möglich, dass für die Basisabschnitte 5a, 5b ein Material verwendet werden kann, das in etwa dem der Flansche 1, 2 entspricht. Üblicherweise handelt es sich hierbei um unlegierte bzw. niedrig-legierte Stähle. Demgegenüber werden die Lippen 6a, 6b und dementsprechend der torusförmige Verbindungsabschnitt 7 aus hoch-legierten Stählen, wie zum Beispiel austenitische Chrom-Nickel-Stahl oder Nickel-Basis-Werkstoffe, gebildet, da diese Materialien eine hohe Bruchdehnung zum Beispiel größer als 30 % aufweisen und damit radiale Belastungen sehr gut ausgleichen können. Der Vorteil dieser mehrteiligen Ausgestaltung liegt nunmehr darin, dass sowohl die Kehlnähte 10a, 10b, die üblicherweise auch als Befestigungsnähte bezeichnet werden, als auch die Dichtungsnaht 9 stets zwischen Bauteilen aus gleichen bzw. ähnlichen Materialien gebildet werden.

Zur Verbindung der Basisabschnitte 5a, 5b mit den Lippen 6a, 6b sind die Lippen 6a, 6b mit der Plattierung 14a, 14b verschweißt. An dieser Stelle ist eine Verschweißung zwischen ungleichen Materialien jedoch unproblematisch, da die Basisabschnitte 5a, 5b und die Lippen 6a, 6b stets auf Druck beansprucht werden.

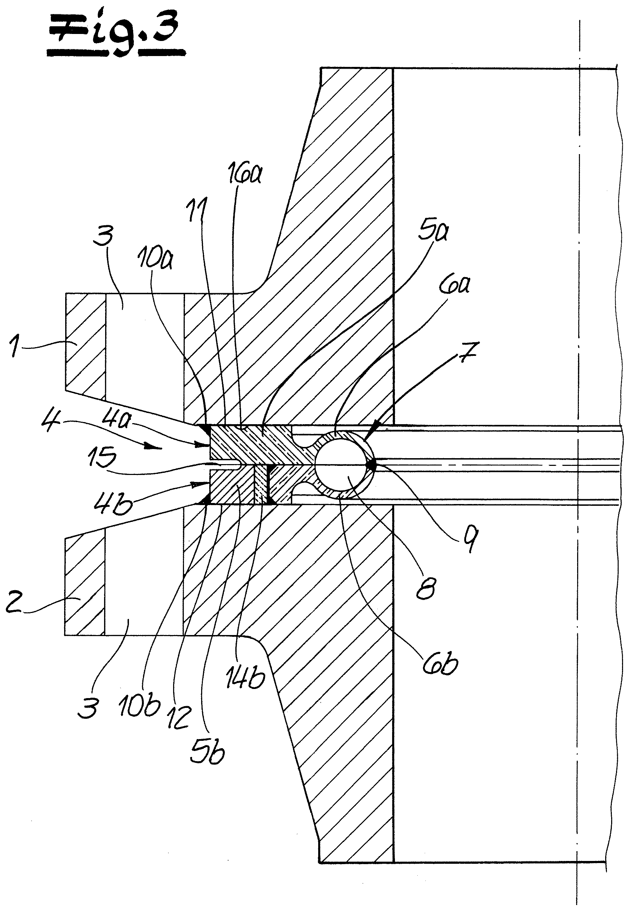

Während gemäß der Fig. 2 beide Schweißringhälften 5a, 5b mehrstückig ausgebildet sind, liegt es auch im Rahmen der Erfindung, lediglich eine der Schweißringhälften 4b mehrteilig und die andere Schweißringhälfte 4a einstückig auszubilden. Eine solche Ausgestaltung ist in der Fig. 3 aufgezeigt.

Sowohl gemäß der Ausgestaltung gemäß der Fig. 2 als auch gemäß der Ausgestaltung der Fig. 3 ist lediglich in der Schweißringhälfte 4a eine Einkerbung 16a realisiert, wohingegen die Schweißringhälfte 4b frei von einer Einkerbung 16b ist. Grundsätzlich können aber auch beide Schweißringhälften 4a, 4b eine Einkerbung 16a, 16b aufweisen.

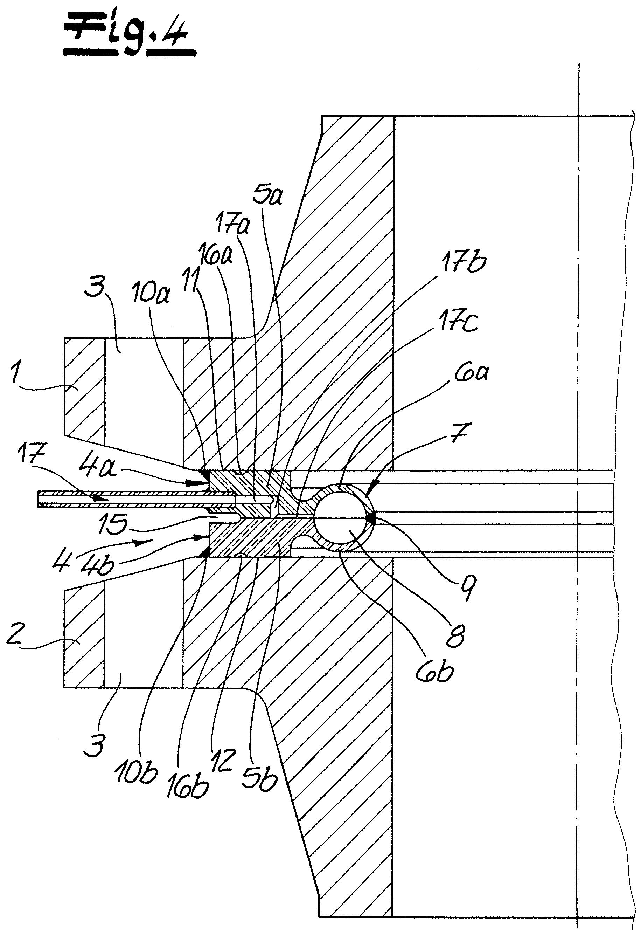

Die Fig. 4 zeigt eine Ausgestaltung gemäß der Fig. 1, jedoch ohne eine den torusförmigen Verbindungsabschnitt 7 schützende Haube 13. Im Unterschied zu der Schweißringdichtung 4 gemäß der Fig. 1 sind nunmehr mehrere radiale Kanäle 17 vorgesehen, über die ein Spülgas von außen in den Innenraum 8 des torusförmigen Verbindungsabschnittes 7 eingebracht werden kann. Der radiale Kanal 17 weist hierzu einen ersten Kanalabschnitt 17a auf, der in Form einer Bohrung in den ersten Basisabschnitt 5a der ersten Schweißringhälfte 4a gebildet ist. Ein dritter Kanalabschnitt 17c ist in Form einer Einkerbung an der ersten Anlagefläche der Schweißringhälfte 4a gebildet, wobei beide Kanalabschnitte 17a, 17c über einen zweiten in vertikaler Richtung verlaufenden Kanalabschnitt 17b miteinander in Verbindung stehen.

## Patentansprüche

1. Flanschverbindung mit zwei Flanschen (1, 2) und einer zwischen den Flanschen (1, 2) angeordneten Schweißringdichtung (4), wobei die Schweißringdichtung (4) zwei übereinander angeordnete Schweißringhälften (4a, 4b) aufweist, die jeweils einen Basisabschnitt (5a, 5b) und eine daran angeordnete Lippe (6a, 6b) aufweisen, wobei die Schweißringhälften (4a, 4b) an dem Basisabschnitt (5a, 5b) über eine Kehlnaht (10a, 10b) mit dem anliegenden Flansch (1, 2) verschweißt sind und wobei die Lippen (6a, 6b) einen torusförmigen Verbindungsabschnitt (7) mit einem hohlen Innenraum (8) bilden und die Schweißringhälften (4a, 4b) an dem torusförmigen Verbindungsabschnitt (7) über eine Dichtungsnaht (9) miteinander verschweißt sind,
**dadurch gekennzeichnet, dass**
der torusförmige Verbindungsabschnitt (7) radial innen liegend angeordnet ist und wobei zumindest eine der Schweißringhälften (4a, 4b) auf einer der ersten Anlagefläche gegenüberliegenden zweiten Anlagefläche eine in Umfangsrichtung verlaufende Einkerbung (16a, 16b) aufweist.

2. Flanschverbindung nach Anspruch 1, **dadurch gekennzeichnet, dass** die Schweißringhälften (4a, 4b) über eine erste Anlagefläche des Basisabschnittes (5a, 5b) aneinander anliegen und zumindest die erste Anlagefläche einer der Schweißringhälften (4a, 4b) einen in vertikaler Richtung verlaufenden Rücksprung aufweist, wobei sich zwischen den Schweißringhälften (4a, 4b) ein radial nach außen hin offener Ringspalt (15) bildet.

3. Flanschverbindung nach einem der Ansprüche 1 bis 2, **dadurch gekennzeichnet, dass** zumindest eine der Schweißringhälften (4a, 4b) aus einem austenitischen Chrom-Nickel-Stahl oder aus einem Nickel-Basis-Werkstoff gebildet ist.

4. Flanschverbindung nach einem der Ansprüche 1 bis 3, **dadurch gekennzeichnet, dass** der Basisabschnitt (5a, 5b) zumindest einer der Schweißringhälften (4a, 4b) separat von der Lippe (6a, 6b) gebildet ist, wobei der Basisabschnitt (5a, 5b) und die Lippe (6a, 6b) über eine Plattierung (14a, 14b) miteinander verbunden sind.

5. Flanschverbindung nach Anspruch 4, **dadurch gekennzeichnet, dass** der Basisabschnitt (5a, 5b) aus einem unlegierten oder niedrig-legierten ferritischen Kohlenstoffstahl und die Lippe aus austenitischen Chrom-Nickel-Stahl oder aus einem Nickel-Basis-Werkstoff gebildet sind.

6. Flanschverbindung nach einem der Ansprüche 1 bis 5, **dadurch gekennzeichnet, dass** eine Haube (13) den torusförmigen Verbindungsabschnitt (7) umhüllt.

7. Flanschverbindung nach Anspruch 6, **dadurch gekennzeichnet, dass** die Haube (13) aus einem Chrom-Nickel-Stahl gefertigt ist.

8. Flanschverbindung nach einem der Ansprüche 1 bis 7, **dadurch gekennzeichnet, dass** sich zumindest ein radialer Kanal (17) von außen bis zu dem hohlen Innenraum (8) des torusförmigen Verbindungsabschnittes (7) erstreckt.

9. Verfahren zur Bildung einer Flanschverbindung nach einem der Ansprüche 1 bis 8, wobei die Lippen (6a, 6b) der Schweißringhälften (4a, 4b) über eine Dichtungsnaht (9) miteinander verbunden werden und einen torusförmigen Verbindungsabschnitt (7) bilden, wobei die Schweißringdichtung (4) zwischen zwei Flanschen (1, 2) angeordnet und gegenüber diesen verspannt wird, wobei die Schweißringhälften (4a, 4b) mit jeweils einem Flansch (1, 2) an einer Dichtungsfläche (16a, 16b) über eine Kehlnaht (10a, 10b) verschweißt werden.

10. Verfahren nach Anspruch 9, wobei die Dichtungsnaht (9) an dem torusförmigen Verbindungsabschnitt (7) vor der Anordnung zwischen den Flanschen (1, 2) hinsichtlich ihrer Qualität untersucht wird.

11. Verfahren nach Anspruch 9 oder 10, wobei die Dichtungsnaht (9) an dem torusförmigen Verbindungsabschnitt (7) vor der Anordnung der Schweißringdichtung (4) zwischen den Flanschen (1, 2) wärmebehandelt wird.

12. Verfahren nach einem der Ansprüche 9 bis 11, wobei die Schweißringhälften (4a, 4b) vor dem Verschweißen der Schweißringhälften (4a, 4b) miteinander und/oder vor dem Verschweißen der Schweißringhälften (4a, 4b) mit den Flanschen (1, 2) vorgewärmt werden.

## Claims

1. A flange connection comprising two flanges (1, 2) and a weld ring seal (4) arranged between the flanges (1, 2), wherein the weld ring seal (4) comprises two weld ring halves (4a, 4b) arranged above one another, each having a base section (5a, 5b) and a lip (6a, 6b) arranged thereon, wherein the weld ring halves (4a, 4b) are welded at the base section (5a, 5b) to the adjacent flange (1, 2) by means of a fillet weld (10a, 10b), and wherein the lips (6a, 6b) form a toroidal connecting section (7) having a hollow interior (8), and the weld ring halves (4a, 4b) are welded to one another at the toroidal connecting section (7) by means of a sealing weld (9),
**characterized in that**
the toroidal connecting section (7) is arranged radially on the inside and wherein at least one of the weld ring halves (4a, 4b) has a notch (16a, 16b) extending in the circumferential direction on a second abutment surface opposite the first abutment surface.

2. The flange connection according to claim 1, **characterized in that** the weld ring halves (4a, 4b) bear against one another via a first abutment surface of the base section (5a, 5b) and at least the first abutment surface of one of the weld ring halves (4a, 4b) has a recess extending in the vertical direction, wherein a radially outwardly open annular gap (15) is formed between the weld ring halves (4a, 4b).

3. The flange connection according to one of claims 1 to 2, **characterized in that** at least one of the weld ring halves (4a, 4b) is formed from an austenitic chromium-nickel steel or from a nickel-based material.

4. The flange connection according to one of claims 1 to 3, **characterized in that** the base section (5a, 5b) of at least one of the weld ring halves (4a, 4b) is formed separately from the lip (6a, 6b), wherein the base section (5a, 5b) and the lip (6a, 6b) are connected to one another by means of a cladding (14a, 14b).

5. The flange connection according to claim 4, **characterized in that** the base section (5a, 5b) is formed from an unalloyed or low-alloy ferritic carbon steel and the lip is formed from an austenitic chromium-nickel steel or from a nickel-based material.

6. The flange connection according to one of claims 1 to 5, **characterized in that** a cap (13) surrounds the toroidal connecting section (7).

7. The flange connection according to claim 6, **characterized in that** the cap (13) is made of a chromium-nickel steel.

8. The flange connection according to one of claims 1 to 7, **characterized in that** at least one radial channel (17) extends from the outside to the hollow interior (8) of the toroidal connecting section (7).

9. A method for forming a flange connection according to one of claims 1 to 8, wherein the lips (6a, 6b) of the weld ring halves (4a, 4b) are connected to one another by means of a sealing weld (9) and form a toroidal connecting section (7), wherein the weld ring seal (4) is arranged between two flanges (1, 2) and clamped relative thereto, wherein the weld ring halves (4a, 4b) are welded to a respective flange (1, 2) at a sealing surface (16a, 16b) by means of a fillet weld (10a, 10b).

10. The method according to claim 9, wherein the sealing weld (9) at the toroidal connecting section (7) is inspected with regard to its quality prior to arrangement between the flanges (1, 2).

11. The method according to claim 9 or 10, wherein the sealing weld (9) at the toroidal connecting section (7) is heat-treated prior to arrangement of the weld ring seal (4) between the flanges (1, 2).

12. The method according to one of claims 9 to 11, wherein the weld ring halves (4a, 4b) are preheated prior to welding the weld ring halves (4a, 4b) to one another and/or prior to welding the weld ring halves (4a, 4b) to the flanges (1, 2).

## Revendications

1. Raccord à brides avec deux brides (1, 2) et un joint d'étanchéité annulaire de soudure (4) disposé entre les deux brides (1, 2), sachant que le joint d'étanchéité annulaire de soudure (4) comporte deux moitiés d'anneau de soudure disposées (4a, 4b) l'une sur l'autre, qui comportent respectivement une section de base (5a, 5b) et une lèvre (6a, 6b) disposée dessus, sachant que les moitiés d'anneau de soudure (4a, 4b) sont soudées à la bride adjacente (1, 2) sur la section de base (5a, 5b) par le biais d'une soudure d'angle (10a, 10b) et sachant que les lèvres (6a, 6b) forment une section de raccordement torique (7) avec un espace intérieur creux (8) et les moitiés d'anneau de soudure (4a, 4b) sont soudées entre elles sur la section de raccordement torique (7) par le biais d'un cordon d'étanchéité (9),
**caractérisé en ce que**
la section de raccordement torique (7) est disposée située radialement à l'intérieur et sachant qu'au moins une des moitiés d'anneau de soudure (4a, 4b) comporte une encoche (16a, 16b) passant en direction périphérique sur une deuxième surface d'appui opposée à la première surface d'appui.

2. Raccord à brides selon la revendication 1, **caractérisé en ce que** les moitiés d'anneau de soudure (4a, 4b) adhèrent l'une à l'autre par le biais d'une première surface d'appui de la section de base (5a, 5b) et au moins la première surface d'appui d'une des moitiés d'anneau de soudure (4a, 4b) comporte un retrait passant en direction verticale, sachant qu'un intervalle annulaire (15) ouvert vers l'extérieur se forme entre les moitiés d'anneau de soudure (4a, 4b).

3. Raccord à brides selon l'une quelconque des revendications 1 à 2, **caractérisé en ce qu'**au moins une des moitiés d'anneau de soudure (4a, 4b) est formée d'un acier austénitique au nickel-chrome ou d'un matériau à base de nickel.

4. Raccord à brides selon l'une quelconque des revendications 1 à 3, **caractérisé en ce que** la section de base (5a, 5b) d'au moins une des moitiés d'anneau de soudure (4a, 4b) est formée séparément de la lèvre (6a, 6b), sachant que la section de base (5a, 5b) et la lèvre (6a, 6b) sont reliées entre elles par le biais d'un placage (14a, 14b).

5. Raccord à brides selon la revendication 4, **caractérisé en ce que** la section de base (5a, 5b) est formée d'un acier au carbone ferritique non allié ou faiblement allié et la lèvre d'un acier austénitique au nickel-chrome ou d'un matériau à base de nickel.

6. Raccord à brides selon l'une quelconque des revendications 1 à 5, **caractérisé en ce qu'**une calotte (13) enveloppe la section de raccordement torique (7).

7. Raccord à brides selon la revendication 6, **caractérisé en ce que** la calotte (13) est fabriquée dans un acier au nickel-chrome.

8. Raccord à brides selon l'une quelconque des revendications 1 à 7, **caractérisé en ce qu'**au moins un conduit radial (17) s'étend de l'extérieur jusqu'à l'espace intérieur creux (8) de la section de raccordement torique (7).

9. Procédé de formation d'un raccord à brides selon l'une quelconque des revendications 1 à 8, sachant que les lèvres (6a, 6b) des moitiés d'anneau de soudure (4a, 4b) sont reliées entre elles par un cordon d'étanchéité (9) et forment une section de raccordement torique (7), sachant que le joint d'étanchéité annulaire de soudure (4) est disposé entre deux brides (1, 2) et est tendu opposé à celles-ci, sachant que les moitiés d'anneau de soudure (4a, 4b) sont soudées respectivement à une bride (1, 2) sur une surface d'étanchéité (16a, 16b) par le biais d'une soudure d'angle (10a, 10b).

10. Procédé selon la revendication 9, sachant que le cordon d'étanchéité (9) sur la section de raccordement torique (7) est analysée quant à sa qualité avant la mise en place entre les brides (1, 2).

11. Procédé selon la revendication 9 ou 10, sachant que le cordon d'étanchéité (9) est soumis à un traitement thermique sur la section de raccordement torique (7) avant la mise en place du joint d'étanchéité annulaire de soudure (4) entre les brides (1, 2).

12. Procédé selon l'une quelconque des revendications 9 à 11, sachant que les moitiés d'anneau de soudure (4a, 4b) sont préchauffées avant le soudage des moitiés d'anneau de soudure (4a, 4b) l'une à l'autre et/ou avant le soudage des moitiés d'anneau de soudure (4a, 4b) avec les brides (1, 2).
